# EUROPÄISCHE PATENTSCHRIFT

(11) **EP 2 743 038 B1**
(45) Veröffentlichungstag und Bekanntmachung des Hinweises auf die Patenterteilung: **01.02.2017**
(21) Anmeldenummer: 13195250.9
(22) Anmeldetag: 02.12.2013
(51) Int. Cl.: B25J 5/00, B62D 57/024, A47L 9/00

(54) **Anordnung zur Überwindung eines Verfahrhindernisses**
Assembly for overcoming a procedural obstacle
Dispositif destiné à surmonter un obstacle au roulement

(30) Priorität: 17.12.2012 DE 102012112402
(43) Veröffentlichungstag der Anmeldung: 18.06.2014
(73) Patentinhaber: Vorwerk & Co. Interholding GmbH, 42275 Wuppertal (DE)
(72) Erfinder: Windorfer, Harald, Dr., 40822 Mettmann (DE)
(74) Vertreter: Müller, Enno

(56) Entgegenhaltungen:
- EP-A1- 0 658 402
- EP-A2- 1 806 210
- FR-A1- 2 856 622
- US-A- 5 228 709
- US-A1- 2002 104 692

## Beschreibung

Die Erfindung betrifft ein selbsttätig verfahrbares Bodenreinigungsgerät nach den Merkmalen des Oberbegriffes des Anspruches 1.

Selbsttätig verfahrbare Bodenreinigungsgeräte sind bekannt, so insbesondere in Form von autonom arbeitenden Saug- und/oder Kehrrobotern, weiter insbesondere zur Reinigung und Pflege von Bodenbelägen im Haushaltsbereich. Ein solcher Saug-/Kehrroboter ist beispielsweise bekannt aus der DE 10242257 A1. Derartige Geräte verfügen über zumindest ein angetriebenes Verfahrrad, weiter bevorzugt über zwei solcher Verfahrräder, insbesondere zur selbsttätigen Fortbewegung insbesondere auf dem zu reinigenden Boden. Es besteht das Bedürfnis, das Bodenreinigungsgerät auch bodenseitige Hindernisse von geringer Höhe von beispielsweise bis zu 20 mm selbsttätig überfahren zu lassen, so beispielsweise Türschwellen.

Diesbezüglich sind Lösungen bekannt, bei welchen das Reinigungsgerät über eine Hebeeinrichtung verfügt, welche Hebeeinrichtung einen gesonderten Antrieb aufweist (vgl. DE 202008017137 U1). Die Hebeeinrichtung wird bei Erfassen eines Hindernisses aktiviert, so insbesondere resultierend aus einer Überwachung der Umgebung des Bodenreinigungsgerätes im Zuge eines Verfahrens desselben.

Zum Stand der Technik ist weiter auf die EP 1806210 A2, US 2002/104692 A1, FR 2856622 A1, EP 0658402 A1 und US 5228709 A zu verweisen.

Ausgehend von dem zunächst genannten Stand der Technik stellt sich der Erfindung die Aufgabe, ein selbsttätig verfahrbares Bodenreinigungsgerät im Hinblick auf eine Anordnung zur Überwindung eines Verfahrhindernisses vorteilhaft auszugestalten. Die Aufgabe ist beim Gegenstand des Anspruches 1 gelöst, wobei darauf abgestellt ist, dass an dem

Verfahrrad ein, mit einer vorderen Endfläche über eine Lauffläche des Verfahrrades in Verfahrrichtung hinausragendes Anhebeteil exzentrisch verschwenkbar gelagert ist, wobei eine gehäusefeste Gegenlagerung vorgesehen ist. Zufolge dieser Ausgestaltung ist eine Anordnung zur Überwindung eines Verfahrhindernisses angegeben, welches sich insbesondere durch einen konstruktiv einfachen Aufbau auszeichnet. Zufolge der exzentrisch verschwenkbaren Lagerung des Anhebeteils an dem Verfahrrad ist unter Zusammenwirkung mit einer gehäusefesten Gegenlagerung des Anhebeteils eine günstige Kinematik zum Anheben des Bodenreinigungsgerätes auf oder über ein im Verfahrweg sich befindliches Hindernis gegeben. Das Verfahrrad und über dieses Verfahrrad insgesamt das Bodenreinigungsgerät wird unter Nutzung des exzentrisch verschwenkbaren Anhebeteils insbesondere auf das zu überfahrende Hindernis gehoben, wobei in vorteilhafter Weise das Überfahren des Hindernisses unabhängig ist von dem Durchmesser des Verfahrrades, was sich wiederum günstig auf die Ausgestaltung des Bodenreinigungsgerätes insgesamt auswirkt. Zumindest in einer Verschwenkstellung ragt eine vordere Endfläche des Anhebeteiles - mit Bezug auf eine Projektion in Erstreckungsrichtung der Verfahrradachse - über die Lauffläche des Verfahrrades in üblicher Verfahrrichtung des Gerätes hinaus, zur Ermöglichung einer Abtastung etwaiger Hindernisse vor dem Verfahrrad. Hierbei wirkt das Anhebeteil hebelartig, sobald dieses mit dem über die Lauffläche des Verfahrrades hinausragenden Abschnitts auf ein, gegenüber dem Boden, auf welchem das Verfahrrad aufsitzt, höheren Niveau liegendes Hindernis trifft.

In einer bevorzugten Ausgestaltung ist vorgesehen, dass das Anhebeteil nur durch den Antrieb des Verfahrrades bewegt ist. Das Anhebeteil wird hierbei bevorzugt unmittelbar durch das Verfahrrad bewegt, an welchem das Anhebeteil exzentrisch verschwenkbar gelagert ist. Bei einer bevorzugten Anordnung von zwei Verfahrrädern und weiter bevorzugter Anordnung von zwei, jeweils einem Verfahrrad zugeordneten Anhebeteilen, werden diese in bevorzugter Ausgestaltung jeweils durch das Verfahrrad bewegt, an welchem diese exzentrisch verschwenkbar gelagert sind. Alternativ ist auch eine mittelbare Bewegung des Anhebeteiles möglich, beispielsweise zufolge einer starren Verbindung zwischen zwei oder mehreren Anhebeteilen, wobei lediglich ein Anhebeteil durch ein Verfahrrad unmittelbar bewegt wird.

Eine Lagerachse des Anhebeteils verläuft in bevorzugter Ausgestaltung parallel zu einer Drehachse des Verfahrrades, weiter bevorzugt quergerichtet zu einer üblichen Verfahrbewegung des Gerätes, insbesondere in Parallelausrichtung zur zu befahrenden Bodenebene.

In weiter bevorzugter Ausgestaltung beträgt die Exzentrizität der Anlenkung des Anhebeteils an dem Verfahrrad im Verhältnis zu der Verfahrrad-Drehachse ein Zwanzigstel bis ein Halb des Durchmessers des Verfahrrades, weiter bevorzugt ein Achtel bis ein Viertel des Durchmessers, weiter bevorzugt etwa ein Sechstel des Durchmessers.

In der weitest vorstehenden Stellung des Anhebeteiles in üblicher Verfahrrichtung des Gerätes über die Lauffläche des Verfahrrades ragt die vordere Endfläche des Anhebeteiles in bevorzugter Ausgestaltung ein Zwanzigstel bis zum einfachen Durchmesser des Verfahrrades über die Lauffläche desselben vor, weiter bevorzugt ein Drittel bis ein Fünftel, insbesondere bevorzugt etwa ein Viertel des Durchmessers.

In einer bevorzugten Weiterbildung ist vorgesehen, dass in der weitest zurückgezogenen Stellung die Endfläche mit der Lauffläche abschließt oder - mit Bezug auf eine übliche Verfahrrichtung des Gerätes - dahinter zurückbleibt. Entsprechend ragt die Endfläche in der am weitest zurückgezogenen Stellung bevorzugt nicht über die in einer Projektion in Richtung der Verfahrrad-Drehachse über die umlaufende Kreiskontur des Verfahrrades beziehungsweise der Lauffläche hinaus, schließt vielmehr bevorzugt mit dieser umlaufenden Kreislinie der Lauffläche ab oder liegt innerhalb der durch die Kreislinie der Lauffläche begrenzten Projektionsfläche.

Das Anhebeteil weist in bevorzugter Ausgestaltung in seinem vorderen Endbereich, weiter bevorzugt die Endfläche hierbei aufnehmend, eine Anhebefläche auf. Mit dieser Anhebefläche stützt sich das Anhebeteil in einer in üblicher Verfahrrichtung über die Lauffläche frei hinausragenden Stellung des Anhebeteils auf einem Hindernis, beispielsweise auf einer zu überfahrenden Schwelle, ab. Es ist so ein definierter Bereich des Anhebeteils gegeben, welcher zur Zusammenwirkung mit dem Hindernis ausgebildet ist.

Die Anhebefläche weist in einer Ausgestaltung zur reib- beziehungsweise kraftschlüssigen Zusammenwirkung mit einer zugewandten Fläche des Hindernisses eine rutschfeste Ausgestaltung auf, so beispielsweise eine Profilierung der Fläche, weiter beispielsweise eine feinverzahnte Fläche. In bevorzugter Ausgestaltung ist die Anhebefläche zumindest teilweise durch ein Weichmaterial, wie beispielsweise Weichgummi oder Weichkunststoff, gebildet, was in Zusammenwirkung mit der Abstützfläche des zu überfahrenden Hindernisses eine das Anheben des Gerätes begünstigende Haftung erbringt.

Um bei einer Abstützung des Anhebeteiles auf einer zugewandten Fläche das Anheben des oder der Verfahrräder und somit das Anheben des Gerätes weiter zu unterstützen, ist in bevorzugter Ausgestaltung der Reibungskoeffizient im Bereich der Anhebefläche größer gewählt als der, der Lauffläche des Verfahrrades. So ist weiter bevorzugt die Lauffläche des Verfahrrades aus einem im Vergleich zu der Anhebefläche harten Material, wie beispielsweise Hartkunststoff oder Hartgummi, gebildet.

Die gehäuseseitige Lagerung des Anhebeteiles ist in bevorzugter Ausgestaltung mittels eines das Gehäuse mit dem Anhebeteil verbindenden Lenkers gebildet. Dieser Lenker ist bevorzugt um eine parallel zur Lagerachse des Anhebeteiles und somit weiter bevorzugt parallel zur Drehachse des Verfahrrades verlaufende Achse schwenkbeweglich am Gehäuse des Gerätes beziehungsweise an einem mit dem Gehäuse des Gerätes verbundenen Fahrwerksabschnitt verbunden. Die Verbindungsachse zwischen Lenker und Anhebeteil verläuft weiter bevorzugt gleichfalls parallel zu den vorgenannten Achsen.

Die gehäuseseitige Lenkerlagerung ist in bevorzugter Ausgestaltung oberhalb der Achse des Verfahrrades vorgesehen, weiter bevorzugt zugeordnet einer im üblichen Verfahrzustand des Gerätes parallel zur Bodenfläche verlaufenden, die Lauffläche des Verfahrrades zumindest annähernd tangierenden Ebene. In alternativer Ausgestaltung ist die gehäuseseitige Lenkerlagerung unterhalb der Verfahrradachse vorgesehen.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10- Schritten der jeweiligen Dimension, gegebenenfalls also auch dimensionslos, insbesondere 1,01-Fach etc., einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

Nachstehend ist die Erfindung anhand der beigefügten Zeichnung erläutert, die aber lediglich ein Ausführungsbeispiel darstellt. Auf der Zeichnung zeigt:
- Fig. 1: ein Bodenreinigungsgerät in partiell aufgebrochener, perspektivischer Darstellung;

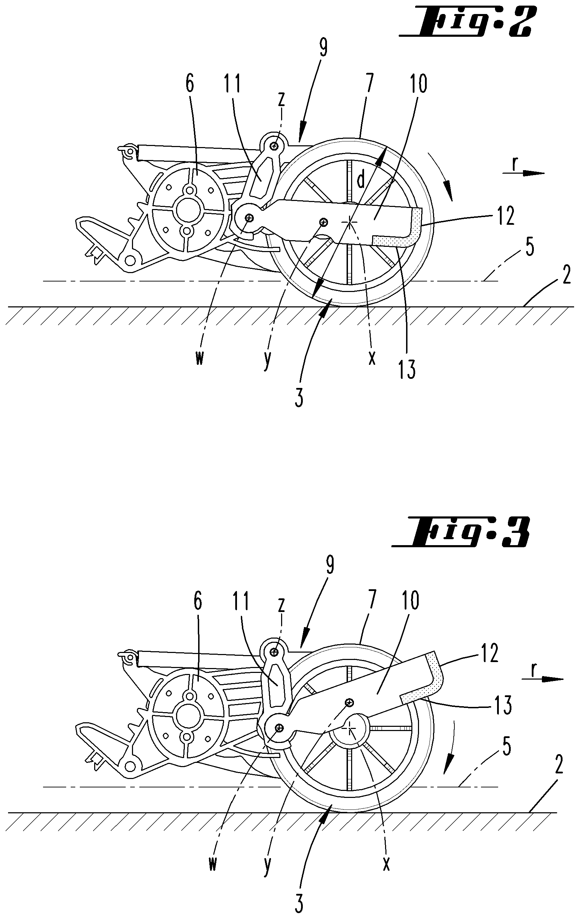

- Fig. 2: eine Seitenansicht gegen ein Verfahrrad des Gerätes mit einer das Verfahrrad tragenden Schwinge und einer Anordnung zur Überwindung eines Verfahrhindernisses, bei Verfahren des Gerätes in üblicher Verfahrrichtung;
- Fig. 3: eine Folgedarstellung zu Figur 2, eine Zwischenstellung der Anordnung bei einem weiteren Verfahren des Gerätes betreffend;
- Fig. 4: eine weitere Folgedarstellung;
- Fig. 5: eine Folgedarstellung zur Figur 4 bei Aufsetzen eines Anhebeteils zum Anheben des Verfahrrades auf das Verfahrhindernis;
- Fig. 6: eine Folgedarstellung zu Figur 5, die Stellung nach Anheben des Verfahrrades auf das Hindernis betreffend;
- Fig. 7: eine der Figur 4 entsprechende Darstellung, jedoch bei Verfahren des Gerätes entgegen der üblichen Verfahrrichtung;
- Fig. 8: eine Folgedarstellung zu Figur 7, eine Zwischenstellung im Zuge des Anhebens des Verfahrrades beziehungsweise des Gerätes auf das Hindernis betreffend.

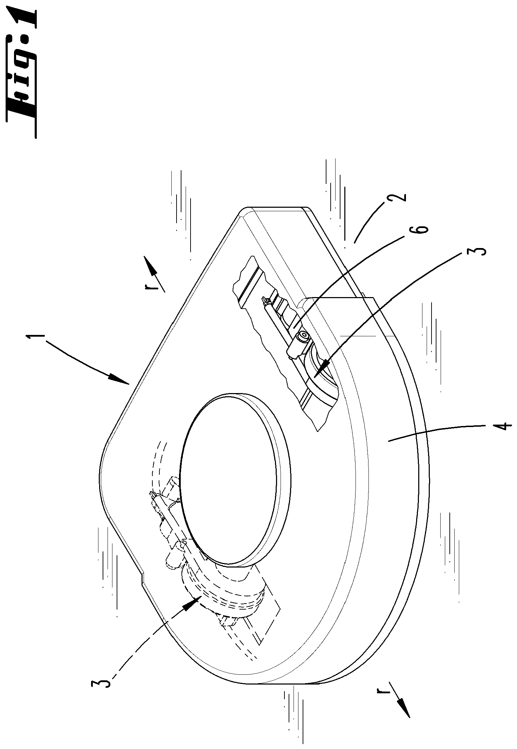

Dargestellt und beschrieben ist zunächst mit Bezug zu Figur 1 ein selbsttätig verfahrbares Bodenreinigungsgerät 1 mit einem Chassis, welches unterseitig, dem zu pflegenden Boden 2 zugewandt, elektromotorisch angetriebene Verfahrräder 3 aufweist. Das Chassis ist überfangen von einer Gerätehaube 4.

Das Gerät 1 weist bevorzugt eine elektromotorisch angetriebene, den Chassisboden 5 zur Bürstbearbeitung des Bodens 2 durchsetzende, nicht dargestellte Bürste auf, welche in weiter bevorzugter Ausführung einen Saugmund durchsetzt, über welchen mittels einer Saugluftströmung der Boden 2 abgesaugt wird.

Die Elektroversorgung der einzelnen Elektrokomponenten des Gerätes 1 ist über einen nicht dargestellten, wiederaufladbaren Akkumulator erreicht.

Die Drehachsen x der Verfahrräder 3 sind quergerichtet zu einer üblichen Verfahrrichtung r des Bodenreinigungsgerätes 1, wobei weiter bevorzugt die Verfahrräder 3 beidseitig einer zentralen, vertikalen Geräteachse des Bodenreinigungsgerätes 1 angeordnet sind.

Jedes Verfahrrad 3 ist an einem schwenkbar an dem Chassis beziehungsweise dem Gerät 1 angelenkten Längslenker 6 befestigt. Diese Längslenker 6 sind schwenkbar um eine parallel zur Drehachse x des zugeordneten Verfahrrades 3 verlaufende Schwenkachse gelagert.

Jedes Verfahrrad 3 weist eine umlaufende Lauffläche 7 auf, bevorzugt aus einem Hartmaterial, wie beispielsweise Hartkunststoff.

Um insbesondere in Verfahrrichtung r, jedoch auch in entgegengesetzter Verfahrrichtung r' etwaige bodenseitige Verfahrhindernisse 8, wie beispielsweise Schwellen, besser überfahren zu können, ist eine Anordnung 9 zur Überwindung solcher Verfahrhindernisse 8 vorgesehen. Eine solche Anordnung 9 ist bevorzugt jeweils zugeordnet einem Verfahrrad 3.

Die Anordnung 9 weist hierzu zunächst ein Anhebeteil 10 auf. Hierbei handelt es sich im Wesentlichen um einen steighebelartigen Arm, welcher bevorzugt einer Breitseite des Verfahrrades 3 zugeordnet und in diesem Bereich gelagert ist. Alternativ können auch beidseitig des jeweiligen Verfahrrades 3 solche Anhebeteile 10 vorgesehen sein.

Das Anhebeteil 10 ist als langgestrecktes Flächenteil gebildet und an dem Verfahrrad 3 exzentrisch zu dessen Drehachse x verschwenkbar gelagert. Die Schwenkachse y ist auf einer konzentrisch zur Drehachse x ausgerichteten Kreislinie des Verfahrrades 3 angeordnet, welche Kreislinie einen Durchmesser aufweist, der bevorzugt einem Fünftel bis einem Sechstel des Verfahrrad-Durchmessers d entspricht.

Ausgehend von der Schwenkachse y ragt das Anhebeteil 10 um ein Maß a frei aus, welches Maß a etwa dem 0,5- bis 0,6-Fachen des Verfahrrad-Durchmessers d entspricht. In hierzu entgegengesetzter Richtung erstreckt sich das Anhebeteil 10 bevorzugt in Verlängerung des frei auskragenden Abschnittes, wobei der diesbezügliche Endbereich gelenkig angebunden ist an einen Lenker 11. Dieser Lenker 11 wiederum ist schwenkbeweglich gelagert an dem Gerät 1 beziehungsweise an dem Längslenker 6.

Die Lenkerachse z liegt bevorzugt oberhalb der Drehachse x, dies weiter bevorzugt unter paralleler Ausrichtung zur Drehachse x, wobei weiter bevorzugt auch die Schwenkachse w zwischen Lenker 11 und Anhebeteil 10 parallel hierzu verläuft.

Das Anhebeteil 10 wird bevorzugt unmittelbar über das zugeordnete Verfahrrad 3 angetrieben, wobei insbesondere die Schwenkachse y, darüber hinaus entsprechend auch die vordere, freie Endfläche 12 des Anhebeteiles 10 auf einer zumindest annähernd elliptischen Bahn verlaufen.

Zugeordnet der Endfläche 12 ist an dem Anhebeteil 10 eine Anhebefläche 13 ausgebildet. Diese weist zunächst tendenziell nach vertikal unten, erstreckt sich weiter bevorzugt jedoch bis in die Endfläche 12 hinein. Zumindest die Anhebefläche 13 ist bevorzugt durch ein Weichmaterial, wie beispielsweise Weichgummi oder Weichkunststoff gebildet, dies bei weiter bevorzugter Ausbildung von Anhebeteil 10 und Lenker 11 aus einem Hartkunststoff.

Durch die exzentrische Befestigung des Anhebeteils 10 an dem Verfahrrad 3 und die pendelnde Lagerung über den Lenker 11 wird insbesondere die Anhebefläche 13 auf einer nahezu elliptischen Bahn geführt, wobei das Anhebeteil 10 bei einer Bewegung des Bodenreinigungsgerätes 1 in üblicher Verfahrrichtung r im Zuge einer Verlagerung desselben aus einer weitest zurück verlagerten Stellung in eine weitest vorverlagerten, frei über die Lauffläche 7 hinausragenden Stellung tendenziell nach oben und vorne bewegt wird, dies weiter bevorzugt zufolge der vorgeschlagenen exzentrischen Anlenkung oberhalb der Drehachse x.

Mit Erreichen der Schwenkachse y in dem Bereich unterhalb der Verfahrrad-Drehachse x wird das Anhebeteil 10 mit seinem freien, die Anhebefläche 13 aufweisenden Ende nach unten in Richtung Boden 2 gekippt, dies unter gleichzeitigem Zurückziehen des Anhebeteils 10 bis in eine Rückzugsstellung, in welcher bevorzugt die Endfläche 12 innerhalb der Projektionsfläche des Verfahrrades 3 liegt.

Ist in dem Verfahrweg kein Verfahrhindernis 8, so tritt das Anhebeteil 10, insbesondere dessen Anhebefläche 13, nicht in Kontakt zu dem Boden 2, so dass das Bodenreinigungsgerät 1 ungehindert über die Verfahrräder 3 sich fortbewegen kann.

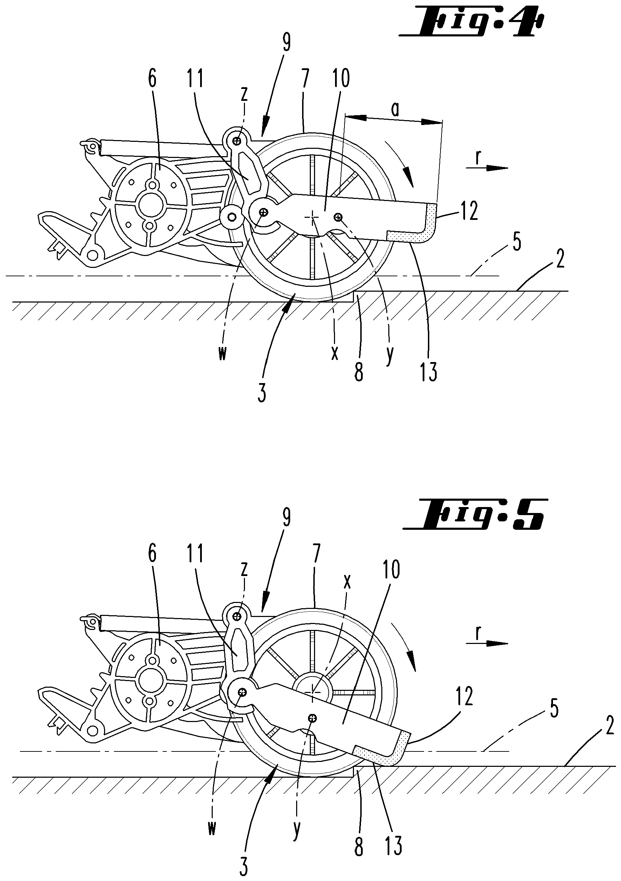

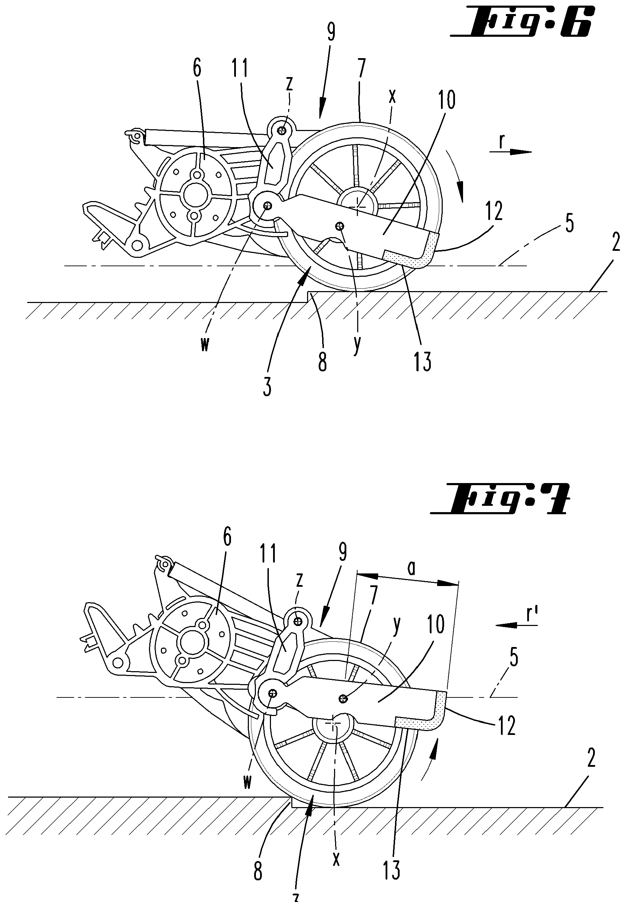

Liegt jedoch, wie beispielsweise in Figur 4 dargestellt, ein Verfahrhindernis 8, beispielsweise in Form einer Bodenschwelle, im Verfahrweg (bei üblicher Verfahrrichtung r), so tritt das Anhebeteil 10 mit der Anhebefläche 13 im Zuge der Vorverlagerung in Verfahrrichtung r und Absenkung desselben auf das Hindernis 8. Zufolge der weiteren elektromotorischen Drehverlagerung des zugeordneten Verfahrrades 3 resultiert aus der gegebenen Kinematik und der reibschlüssigen Abstützung der Anhebefläche 13 auf dem Verfahrhindernis 8 ein Anheben des Verfahrrades 3 und somit des gesamten Gerätes 1 (vergleiche Figur 6).

In bevorzugter Ausgestaltung ist die Lauffläche 7 mit einem geringeren Reibkoeffizienten ausgestattet als die Anhebefläche 13. Weiter ist die Lauffläche 7 bevorzugt so gewählt, dass mit Anstoßen der Lauffläche 7 an einer Hinderniskante (wie beispielsweise in Figur 4 dargestellt) das Verfahrrad 3 gegebenenfalls auf der Stelle dreht, zufolge entsprechender Hemmung des weiteren Verfahrens durch das Hindernis 8. Durch das weitere Drehen des Verfahrrades 3 auf der Stelle jedoch wird das Anhebeteil 10 in die das Verfahrrad 3 anhebende Position bewegt.

In der weiterführenden Bewegung des Anhebeteils 10 zieht dieses das Verfahrrad 3 gegebenenfalls an das Verfahrhindernis 8 heran, so dass das Verfahrrad 3 ab einem geeigneten Anschnittwinkel auf das Verfahrhindernis 8 auffahren kann.

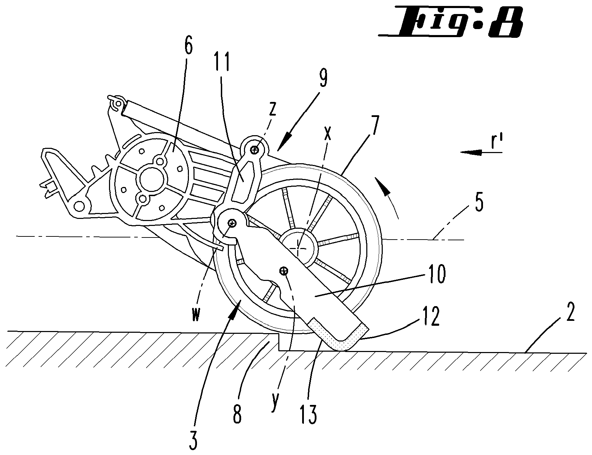

Bei einer Rückwärtsfahrt (Verfahrrichtung r'), d.h. bei einer entgegen zur üblichen Verfahrrichtung r durchgeführten Fahrt des Gerätes 1 schwenkt der Fahrantrieb beziehungsweise der Längslenker 6 mit Treten der Lauffläche 7 gegen eine Hinderniskante gemäß Figur 8 auf, derart, dass das zugeordnete Verfahrrad 3 weiter aus dem Chassisboden 5 heraustritt, dies verbunden mit einer Erhöhung der Bodenfreiheit, d.h. mit einer Erhöhung des Abstandes zwischen Boden 2 und Chassisboden 5.

Durch die geänderte Ausrichtung und Lage des Längslenkers 6 und somit auch der Schwenkhalterung des Lenkers 11 an dem Längslenker 6 erreicht im Zuge der Drehung des Verfahrrades 3 die Anhebefläche 13 des Anhebeteiles 10 den Boden 2, woraufhin das Anhebeteil 10 im Zuge der weiteren Drehung des Verfahrrades 3 dieses anhebt, so dass dieses auf das Verfahrhindernis 8 auffahren kann.

Bei einer Anordnung von zwei Verfahrrädern 3 können die beiden Anhebeteile 10 mechanisch miteinander gekoppelt sein. Bevorzugt ist eine Ausgestaltung, bei welcher jedes Anhebeteil 10 durch das zugeordnete Verfahrrad 3 unmittelbar angetrieben wird, so dass hierdurch auch nur das Anheben eines Verfahrrades 3 bei einem entsprechenden Verfahrhindernis erreicht werden kann.

Durch die Anordnung des einen oder der mehreren Anhebeteile 10 sind Verfahrräder 3 mit verhältnismäßig geringem Durchmesser nutzbar, was sich in vorteilhafter Weise günstig auf die gesamte Gerätehöhe auswirkt.

### Bezugszeichenliste:

- 1: Bodenreinigungsgerät
- 2: Boden
- 3: Verfahrrad
- 4: Gerätehaube
- 5: Chassisboden
- 6: Längslenker
- 7: Lauffläche
- 8: Verfahrhindernis
- 9: Anordnung
- 10: Anhebeteil
- 11: Lenker
- 12: Endfläche
- 13: Anhebefläche

- a: Maß
- d: Durchmesser
- r: Verfahrrichtung
- r': Verfahrrichtung
- w: Schwenkachse
- x: Drehachse
- y: Lagerachse
- z: Lenkerachse

## Patentansprüche

1. Selbsttätig verfahrbares Bodenreinigungsgerät (1) mit einer Anordnung (9) zur Überwindung eines Verfahrhindernisses (8), wobei die Anordnung (9) ein angetriebenes Verfahrrad (3) aufweist, **dadurch gekennzeichnet, dass** an dem Verfahrrad (3) ein, mit einer vorderen Endfläche (12) über eine Lauffläche (7) des Verfahrrades (3) in Verfahrrichtung (r) hinaus ragendes Anhebeteil (10) exzentrisch verschwenkbar gelagert ist, wobei eine gehäusefeste Gegenlagerung vorgesehen ist.

2. Bodenreinigungsgerät nach Anspruch 1, **dadurch gekennzeichnet, dass** das Anhebeteil (10) nur durch den Antrieb des Verfahrrades (3) bewegt ist.

3. Bodenreinigungsgerät nach einem der vorhergehenden Ansprüche, **dadurch gekennzeichnet, dass** eine Lagerachse (y) des Anhebeteils (10) parallel zu einer Drehachse (x) des Verfahrrades (3) verläuft.

4. Bodenreinigungsgerät nach einem der vorhergehenden Ansprüche, **dadurch gekennzeichnet, dass** eine Exzentrizität einer Anlenkung des Anhebeteils (10) an dem Verfahrrad (3) 1/20 bis 1/2 des Durchmessers (d) des Verfahrrades (3) beträgt.

5. Bodenreinigungsgerät nach einem der vorhergehenden Ansprüche, **dadurch gekennzeichnet, dass** in einer weitest vorstehenden Stellung des Anhebeteils (10) die vordere Endfläche (12) 1/20 bis zum einfachen Durchmesser (d) des Verfahrrades (3) über die Lauffläche (7) vorragt.

6. Bodenreinigungsgerät nach einem der vorhergehenden Ansprüche, **dadurch gekennzeichnet, dass** in einer weitest zurück gezogenen Stellung die Endfläche (12) mit der Lauffläche (7) abschließt oder dahinter zurück bleibt.

7. Bodenreinigungsgerät nach einem der vorhergehenden Ansprüche, **dadurch gekennzeichnet, dass** das Anhebeteil (10) in seinem vorderen Bereich eine Anhebefläche (13) aufweist.

8. Bodenreinigungsgerät nach Anspruch 7, **dadurch gekennzeichnet, dass** die Anhebefläche (13) zumindest teilweise durch ein Weichmaterial, wie Weichgummi oder Weichkunststoff, gebildet ist.

9. Bodenreinigungsgerät nach einem der vorhergehenden Ansprüche, **dadurch gekennzeichnet, dass** die Lauffläche (7) des Verfahrrades (3) aus einem Hartmaterial, wie Hartkunststoff, gebildet ist.

10. Bodenreinigungsgerät nach einem der vorhergehenden Ansprüche, **dadurch gekennzeichnet, dass** die gehäuseseitige Gegenlagerung mittels eines das Gehäuse mit dem Anhebeteil (10) verbindenden Lenkers (11) gebildet ist.

11. Bodenreinigungsgerät nach Anspruch 10, **dadurch gekennzeichnet, dass** eine gehäuseseitige Lenkerlagerung oberhalb der Drehachse (x) des Verfahrrades (3) vorgesehen ist.

## Claims

1. Automatically traveling floor cleaning appliance (1) having an arrangement (9) for overcoming an obstruction (8) to traveling movement, wherein the arrangement has a driven travel wheel (3), **characterized in that** on the travel wheel (3), a lifting part (10) is mounted in an eccentrically pivotable manner, the lifting part protruding with a front end surface (12) beyond a running surface (7) of the travel wheel (3) in the direction of travel (r), a counter mounting being provided which is fixed to the housing.

2. Floor cleaning appliance according to claim I, **characterized in that** the lifting part (10) is moved only by the drive of the travel wheel (3).

3. Floor cleaning appliance according to any one of the preceding claims, **characterized in that** a mounting axis (y) of the lifting part (10) runs parallel to an axis of rotation (x) of the travel wheel (3).

4. Floor cleaning appliance according to any one of the preceding claims, **characterized in that** the eccentricity is 1/20 to 1/2 of the diameter (d) of the travel wheel (3).

5. Floor cleaning appliance according to any one of the preceding claims, **characterized in that** in the furthermost protruding position of the lifting part (10), the front end surface (12) protrudes beyond the running surface (7) by 1/20 up to one times the diameter (d) of the travel wheel (3).

6. Floor cleaning appliance according to any one of the preceding claims, **characterized in that** in the furthermost retracted position, the end surface (12) is flush with the running surface (7) or remains behind same.

7. Floor cleaning appliance according to any one of the preceding claims, **characterized in that** in its front region, the lifting part (10) has a lifting surface (13).

8. Floor cleaning appliance according to claim 7, **characterized in that** the lifting surface (13) is at least partially formed by a soft material such as soft rubber or soft plastics.

9. Floor cleaning appliance according to any one of the preceding claims, **characterized in that** the running surface (7) of the travel wheel (3) is made of a hard material such as hard plastics.

10. Floor cleaning appliance according to any one of the preceding claims, **characterized in that** the counter mounting on the housing is formed by means of a control arm (11) that connects the housing to the lifting part (10).

11. Floor cleaning appliance according to claim 10, **characterized in that** a mounting of the control arm is provided above the axis of rotation (x) of the travel wheel (3).

## Revendications

1. Appareil de nettoyage de sol à déplacement autonome (1) comprenant un dispositif (9) pour surmonter un obstacle au déplacement (8), dans lequel le dispositif (9) présente une roue motrice de déplacement (3), **caractérisé en ce qu'**un élément de soulèvement (10) est monté basculant de manière excentrique à la roue de déplacement (3) lequel élément de soulèvement (10) fait saillie avec une surface extrémale avant (12) par-delà une bande de roulement (7) de la roue de déplacement (3) dans la direction de déplacement (r), dans lequel est prévu un contre-montage solidarisé au boitier.

2. Appareil de nettoyage de sol selon la revendication 1, **caractérisé en ce que** l'élément de soulèvement (10) est déplacé uniquement par l'entrainement de la roue de déplacement (3).

3. Appareil de nettoyage de sol selon l'une des revendications précédentes, **caractérisé en ce qu'**un axe de montage (y) de l'élément de soulèvement (10) s'étend parallèlement à un axe de rotation (x) de la roue de déplacement (3).

4. Appareil de nettoyage de sol selon l'une des revendications précédentes, **caractérisé en ce qu'**une excentricité d'une articulation de l'élément de soulèvement (10) à la roue de déplacement (3) est de 1/20 à 1/2 fois le diamètre (d) de la roue de déplacement (3).

5. Appareil de nettoyage de sol selon l'une des revendications précédentes, **caractérisé en ce que** dans une position la plus avancée de l'élément de soulèvement (10), la surface extrêmale avant (12) fait saillie par-delà la bande de roulement (7) de 1/20 à 1 fois le diamètre (d) de la roue de déplacement (3).

6. Appareil de nettoyage de sol selon l'une des revendications précédentes, **caractérisé en ce que** dans une position la plus reculée, la surface extrêmale (12) est au niveau de la bande de roulement (7) ou en arrière de celle-ci.

7. Appareil de nettoyage de sol selon l'une des revendications précédentes, **caractérisé en ce que** l'élément de soulèvement (10) présente une surface de soulèvement (13) dans sa zone avant.

8. Appareil de nettoyage de sol selon la revendication 7, **caractérisé en ce que** la surface de soulèvement (13) est formée au moins partiellement par un matériau mou tel que du caoutchouc souple ou un matériau plastique souple.

9. Appareil de nettoyage de sol selon l'une des revendications précédentes, **caractérisé en ce que** la bande de roulement (7) de la roue de déplacement (3) est formée d'un matériau dur tel qu'un matériau plastique dur.

10. Appareil de nettoyage de sol selon l'une des revendications précédentes, **caractérisé en ce que** le contre-montage côté boîtier est formé au moyen d'une bielle (11) reliant le boîtier avec l'élément de soulèvement (10).

11. Appareil de nettoyage de sol selon la revendication 10, **caractérisé en ce qu'**est prévu un montage de la bielle côté boîtier qui est au-dessus de l'axe de rotation (x) de la roue de déplacement (3).
